# EUROPÄISCHE PATENTANMELDUNG

(11) **EP 3 032 515 A1**
(43) Veröffentlichungstag der Anmeldung: **15.06.2016**
(21) Anmeldenummer: 15196630.6
(22) Anmeldetag: 27.11.2015
(51) Int. Cl.: G08G 1/0962, B60W 30/12, B60W 30/14, B60W 30/16, G08G 1/16, B60Q 1/08

(54) **VORRICHTUNG UND VERFAHREN ZUR WARNMELDUNGSAUSGABE UND/ODER ZUM EINGRIFF IN DIE FAHRZEUGSTEUERUNG EINES KRAFTFAHRZEUGS**

(30) Priorität: 08.12.2014 DE 102014118058
(71) Anmelder: Valeo Schalter und Sensoren GmbH, 74321 Bietigheim-Bissingen (DE)
(72) Erfinder: Simon, Jan, 74321 Bietigheim-Bissingen (DE)

(57) **Zusammenfassung**

Die Erfindung betrifft eine Vorrichtung und ein Verfahren zur Warnmeldungsausgabe und/oder zum Eingriff in die Fahrzeugsteuerung eines Kraftfahrzeugs. Die Vorrichtung 10 umfasst dazu mindestens einen Sensor 12 zur Erfassung 50 der Fahrzeugumgebungsinformationen als Sensordaten 16 sowie mindestens einen Prozessor 18 zur Verarbeitung der Sensordaten 16 in Abhängigkeit mindestens eines auf dem Prozessor 18 ausgeführten Verarbeitungsprogramms 22. Ferner umfasst die Vorrichtung 10 Auswahlmittel 24 zum Auswählen 54 eines oder mehrerer Verarbeitungsprogramme 22 zur Ausführung im Prozessor 18 und Ausgabemittel zur Ausgabe 55 mindestens eines Ausgabesignals 42 zur Warnmeldungsausgabe und/oder zum Eingriff in die Fahrzeugsteuerung. Erfindungsgemäß sind die Auswahlmittel 24 derart eingerichtet, eines oder mehrere Verarbeitungsprogramme 22 in Abhängigkeit ermittelter 56 Fahrzeugposition und/oder der Fahrzeugumgebungsinformationen auszuwählen.

## Beschreibung

Die Erfindung betrifft eine Vorrichtung zur Warnmeldungsausgabe und/oder zum Eingriff in die Fahrzeugsteuerung eines Kraftfahrzeugs nach dem Oberbegriff von Anspruch 1 sowie ein Verfahren zur Warnmeldungsausgabe und/oder zum Eingriff in die Fahrzeugsteuerung eines Kraftfahrzeugs nach dem Oberbegriff von Anspruch 10.

Gemäß dem Stand der Technik sind Fahrsicherheitssysteme bekannt, die Warnmeldungen ausgeben oder in die Fahrzeugsteuerung eingreifen, sobald das Fahrsicherheitssystem eine Gefahrensituation erkennt. Hierzu weisen bekannte Fahrsicherheitssysteme Sensoren auf, die die Fahrzeugumgebung des Fahrzeugs, das z.B. ein PKW ist, überwachen. Insbesondere werden hierbei starre oder sich bewegende Gegenstände, insbesondere Hindernisse, im Fahrbahnbereich detektiert. Die erfassten Fahrzeugumgebungsinformationen werden als Sensordaten für die weitere Verarbeitung zur Verfügung gestellt.

Bekannte Sicherheitssysteme weisen ferner einen Prozessor auf, der die Sensordaten verarbeitet und Ausgabesignale an Warneinrichtungen oder Ausgabemittel, z.B. Warnleuchten, im Fahrgastraum ausgibt. Die Ausgabemittel werden dann in Abhängigkeit der Ausgabesignale angesteuert. Ferner dienen die Ausgabesignale alternativ oder zusätzlich zum Eingriff in die Fahrzeugsteuerung zur Manipulation der vom Fahrer vorgegebenen Fahrbefehle, insbesondere um auf vom Fahrer nicht beachtete Gefahrensituationen zu reagieren und damit das Unfallrisiko zu reduzieren.

Damit der Prozessor aus den Sensordaten die Ausgabesignale erzeugen kann, die zur Gefahrenminimierung dienen, muss mit dem Prozessor mindestens ein Verarbeitungsprogramm ausgeführt werden. Das Verarbeitungsprogramm erzeugt dann in Abhängigkeit der Fahrzeugumgebung die Ausgabesignale. Für jede Sicherheitseinrichtung muss ein eigenes Verarbeitungsprogramm im Prozessor ablaufen und ständig die Sensordaten auswerten, um entsprechende Ausgabesignale zur Ansteuerung der verschiedenen Sicherheitseinrichtungen zu erzeugen.

Bei modernen Fahrzeugen sind eine Vielzahl von Sicherheitseinrichtungen vorgesehen, beispielsweise Fahrerassistenzsysteme, aus der eine Vielzahl von Verarbeitungsprogrammen resultiert. Der Energiebedarf eines Prozessors in modernen Fahrzeugen ist demnach sehr hoch. Außerdem werden Prozessoren aufgrund der hohen Anzahl von zu verarbeitenden Programmen sehr heiß.

Um dem Abzuhelfen sind Verfahren bekannt, die Fahrzeugparameter, wie die Geschwindigkeit nutzen, um hieraus eine Fahrsituation, wie z.B. eine Autobahnfahrt, zu erkennen und nur für diese Fahrsituation benötigte Sicherheitssysteme zu aktivieren, sodass auch nur die Verarbeitungsprogramme der aktivierten Sicherheitssysteme im Prozessor ausgeführt werden. Hierdurch wird eine Überhitzung des Prozessors vermieden sowie der Bedarf an elektrischer Energie des Prozessors reduziert.

Nachteilig ist jedoch, dass aufgrund von untypischen Fahrzeugparametern, wie z.B. ungewöhnlich hohen Geschwindigkeiten im Stadtbereich, Fehlentscheidungen bei der Auswahl der aktivierten Sicherheitssysteme entstehen können. Eine mögliche Gefahrensituation wird demnach nicht erkannt.

Aufgabe der vorliegenden Erfindung ist es daher, die aktuelle Fahrsituation möglichst fehlerfrei einzuschätzen, die hierfür benötigten Sicherheitssystem zu aktivieren und nicht benötigte Sicherheitssysteme zu deaktivieren.

Die vorliegende Erfindung löst dieses Problem durch eine Vorrichtung zur Warnmeldungsausgabe und/oder zum Eingriff in die Fahrzeugsteuerung eines Kraftfahrzeugs nach Anspruch 1 sowie ein Verfahren zur Warnmeldungsausgabe und/oder zum Eingriff in die Fahrzeugsteuerung eines Kraftfahrzeugs nach Anspruch 10.

Die Erfindung umfasst hierzu mindestens einen Sensor, mit dem Fahrzeugumgebungsinformationen, z.B. Verkehrszeichen, Fahrbahnmarkierungen, Personen im Bereich oder auf der Fahrbahn sowie Fahrbahnmarkierungen erfasst werden. Die erfassten Fahrzeugumgebungsinformationen werden in Form von Sensordaten an mindestens einen Prozessor übergeben.

Der Prozessor dient dann zur Verarbeitung der Sensordaten, wobei die Verarbeitung in Abhängigkeit mindestens eines auf dem Prozessor ausgeführten

Verarbeitungsprogramms erfolgt. In Abhängigkeit der Sensordaten und des ausgeführten Verarbeitungsprogramms werden dann vom Prozessor ein oder mehrere Ausgabesignale ausgegeben, die zur Warnmeldungsausgabe und/oder zum Eingriff in die Fahrzeugsteuerung dienen.

Außerdem sind Auswahlmittel vorgesehen, mit denen eines oder mehrere Verarbeitungsprogramme zur Ausführung im Prozessor ausgewählt werden. Hierbei sind die Auswahlmittel erfindungsgemäß derart eingerichtet, eines oder mehrere Verarbeitungsprogramme in Abhängigkeit einer ermittelten Fahrzeugposition und/oder der Fahrzeugumgebungsinformationen auszuwählen.

Wird demnach z.B. eine Fahrzeugposition ermittelt, die in einem Stadtgebiet liegt, so wird beispielsweise das oder die Verarbeitungsprogramme der Sicherheitssysteme im Prozessor ausgeführt, die für Fahrsituationen in Stadtgebieten vorgesehen sind. Dies erfolgt unabhängig von der Fahrzeuggeschwindigkeit, sodass keine Fehlentscheidung erfolgen kann. Eine sichere Auswahl der auszuführenden Verarbeitungsprogramme ist damit gewährleistet.

Gemäß einer ersten Ausführungsform umfasst die erfindungsgemäße Vorrichtung zur Ermittlung der Fahrzeugposition mindestens einen Empfänger zum Empfangen von Signalen eines Navigationssatelitensystems. Mit Hilfe der empfangenen Signale des Navigationssatelitensystems ist auf besonders einfache Weise die Fahrzeugposition bestimmbar. Vorteilhafterweise werden z.B. Empfänger zum Empfangen von Signalen des GPS-, Glonass oder Galileo Systems gewählt, die preisgünstig erhältlich sind.

Gemäß einer weiteren Ausführungsform umfasst die Vorrichtung zur Ermittlung der Fahrzeugposition mindestens einen Mobilfunkempfänger und eine Auswertevorrichtung zur Auswertung von Zellkennungen eines empfangbaren Mobilfunknetzes. Eine derartige Ermittlung der Fahrzeugposition ist zwar ungenauer als die Ermittlung mittels eines Navigationssatelitensystems, kann jedoch beim Ausfall des Navigationssatelitensystems als redundantes Positionsermittlungssystem verwendet werden.

Gemäß einer weiteren Ausführungsform umfasst die Vorrichtung zur Ermittlung der Fahrzeugumgebungsinformationen mindestens einen Laserscanner und/oder mindestens einen LED Sensor. Mit derartig ausgestalteten Sensoren sind z.B. Personen, Bäume oder Fahrbahnbegrenzungen identifizierbar, sodass anhand der identifizierten Objekte auf die Fahrzeugumgebung geschlossen werden kann.

Eine alternative oder zusätzliche Ermittlung der Fahrzeugumgebungsinformationen gemäß einer weiteren Ausführungsform ist durch die Bildauswertung einer vorgesehnen Videokamera möglich. Eine Videokamera zur Ermittlung der Fahrzeugumgebungsinformationen dient ferner, um Verkehrszeichen, wie Zeichen zur Geschwindigkeitsbeschränkung, zu ermittelt.

Nach einer weiteren vorteilhaften Ausführungsform umfasst die Vorrichtung eine digitale Straßenkarte und/oder Navigationskarte, die z.B. in einem Speicher hinterlegt ist. Digitale Straßenkarten und/oder Navigationskarten umfassen üblicherweise Umgebungsinformationen für die kartierten Positionen. Die Vorrichtung ist gemäß dieser Ausführungsform eingerichtet, Fahrzeugumgebungsinformationen mittels einer zuvor, z.B. mit einem GPS Empfänger, ermittelten Fahrzeugposition zu bestimmten. Hierzu werden die in der digitalen Straßenkarte und/oder der Navigationskarte hinterlegten Umgebungsinformationen der ermittelten Fahrzeugposition als Fahrzeugumgebungsinformationen bestimmt. Fahrzeugumgebungsinformationen sind demnach einfach aus der Fahrzeugposition ermittelbar.

Der Prozessor ist nach einer weiteren Ausführungsform ein FPGA (Field Programmable Gate Array), wobei die Auswahlmittel eingerichtet sind, eine dynamische Konfiguration oder Rekonfiguration des FPGAs zur Ausführung des oder der ausgewählten Verarbeitungsprogramme auszuführen. Demnach ist die Realisierung der Vorrichtung mit einem günstigen Prozessor möglich.

Alternativ zu einem FPGA ist gemäß einer weiteren Ausführungsform der Prozessor ein ASIC (Application Specific Integrated Circuit), der im Gegensatz zum FPGA fest konfiguriert ist. Gemäß dieser Ausführungsform sind die Auswahlmittel eingerichtet, das oder die ausgewählten Verarbeitungsprogramme von einem Speicher zur Ausführung in den Prozessor zu laden.

Die Ausgabesignale sind gemäß weiteren Ausführungsformen eingerichtet, die Leuchtweite der Beleuchtungseinrichtung, insbesondere der Fahrzeugscheinwerfer, zu steuern, Warnmeldungen vor Fußgängern auf oder im Bereich der Fahrbahn auszugeben, Warnmeldungen auszugeben oder einen Eingriff in die Fahrgeschwindigkeitsregelung bei Überschreiten der zulässigen Höchstgeschwindigkeit vorzunehmen, Warnmeldungen auszugeben oder einen Eingriff in die Fahrgeschwindigkeitsregelung und/oder Fahrtrichtungsregelung bei Verlassen der Fahrbahn vorzunehmen und/oder Warnmeldungen auszugeben oder einen Eingriff in die Fahrgeschwindigkeitsregelung und/oder Fahrtrichtungsregelung bei Unterschreiten eines vordefinierten Abstands zu vorausfahrenden Fahrzeugen vorzunehmen.

Ferner betrifft die Erfindung ein Verfahren zur Warnmeldungsausgabe und/oder zum Eingriff in die Fahrzeugsteuerung eines Kraftfahrzeugs. Das Verfahren wird insbesondere mit einer Vorrichtung nach einer der genannten Ausführungsformen der erfindungsgemäßen Vorrichtung ausgeführt.

Das Verfahren umfasst dazu das Erfassen der Fahrzeugumgebungsinformationen als Sensordaten. In einem weiteren Schritt werden die erfassten Sensordaten mit mindestens einem Prozessor verarbeitet und in Abhängigkeit mindestens eines auf dem Prozessor ausgeführten Verarbeitungsprogramms Ausgabesignale zur Warnmeldungsausgabe und/oder zum Eingriff in die Fahrzeugsteuerung ausgegeben.

In einem Auswahlschritt werden eine oder mehrerer Verarbeitungsprogramme zur Ausführung im Prozessor mit Auswahlmitteln ausgewählt, wobei eines oder mehrere Verarbeitungsprogramme in Abhängigkeit der ermittelten Fahrzeugposition und/oder der Fahrzeugumgebungsinformationen ausgewählt werden, die mit dem Prozessor ausgeführt werden.

Weitere Ausführungsformen der Erfindung ergeben sich aus den anhand der Zeichnung näher erläuterten Ausführungsbeispielen. In der Zeichnung zeigen:
- Fig. 1: ein Ausführungsbeispiel der Vorrichtung und
- Fig. 2: den Ablauf eines Ausführungsbeispiels des Verfahrens.

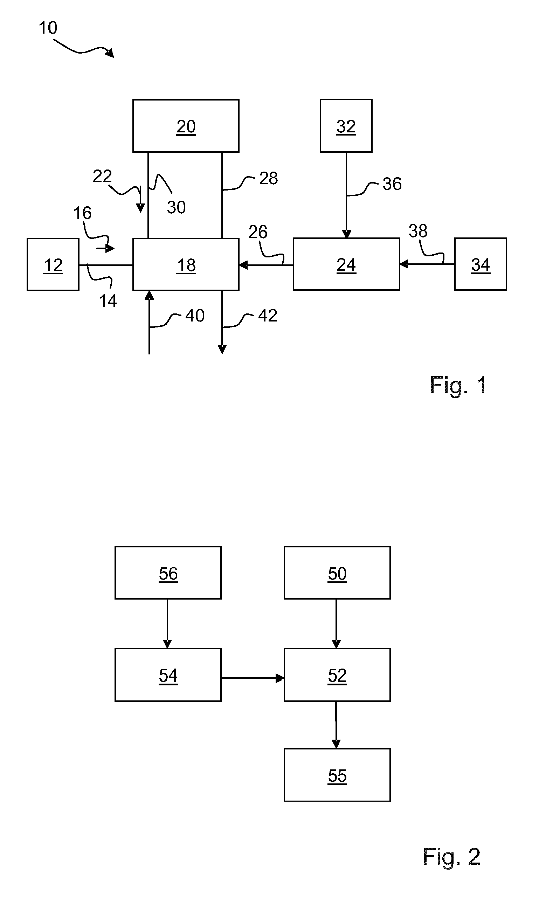

Fig. 1 zeigt eine Vorrichtung 10 zur Warnmeldungsausgabe und/oder zum Eingriff in die Fahrzeugsteuerung eines Kraftfahrzeugs. Die Vorrichtung 10 ist z.B. in einem Fahrzeug, insbesondere einem PKW, angeordnet, wobei der PKW in der Fig. 1 zur besseren Übersicht nicht dargestellt ist.

Die Vorrichtung 10 umfasst einen Sensor 12, der hier einem Laserscanner entspricht. Mit dem Sensor 12 werden Fahrzeugumgebungsinformationen des Fahrzeugs erfasst, in das die Vorrichtung integriert ist. Die erfassten Fahrzeugumgebungsinformationen werden über die Signalleitung 14 als Sensordaten 16 an einen Prozessor 18 übergeben.

Ferner ist ein Speicher 20 vorgesehen, in dem mehrere Verarbeitungsprogramme 22 hinterlegt sind. Auswahlmittel 24 dienen zur Auswahl eines oder mehrerer der im Speicher 20 hinterlegten Verarbeitungsprogramme, die im Prozessor 18 ausgeführt werden sollen. Dazu ist das Auswahlmittel 24 über eine Signalleitung 26 mit dem Prozessor 18 verbunden, der durch das Auswahlmittel 24 über die Signalleitung 26 den Befehl erhält, die ausgewählten Verarbeitungsprogramme 22 zu laden.

Der Prozessor 18 spricht über eine weitere Signalleitung 28 die Speicheradressen im Speicher 20 an, in denen die ausgewählten Verarbeitungsprogramme 22 hinterlegt sind und lädt die ausgewählten Verarbeitungsprogramme 22 über eine Datenleitung 30.

Ferner ist das Auswahlmittel 24 mit einem GPS-Empfänger 32 und einem weiteren Speicher 34 über weitere Signal und Datenleitungen 36, 38 verbunden. Im weiteren Speicher 34, der z.B. auch einem Navigationssystem dient, ist eine digitale Straßenkarte hinterlegt. In dem Auswahlmittel 24 werden die Fahrzeugposition mit dem GPS-Empfänger 32 und Fahrzeugumgebungsinformationen ermittelt.

Die Fahrzeugumgebungsinformationen werden ermittelt, indem Umgebungsinformationen aus der hinterlegten Straßenkarte für die aktuell ermittelte Fahrzeugposition ausgelesen werden.

Das Auswahlmittel 24 entscheidet dann, welche Sicherheitseinrichtungen für die ermittelten Fahrzeugumgebungsinformationen und/oder Fahrzeugposition aktiviert werden sollen und veranlasst den Prozessor 18 die Verarbeitungsprogramme 22, die den ausgewählten Sicherheitseinrichtungen entsprechen, aus dem Speicher 20 zu laden und auszuführen.

Der Prozessor 18 gibt dann anhand der mit dem Sensor 12 ermittelten Fahrzeugumgebungsinformationen und den Fahrzeugparametern, wie z.B. der aktuellen Geschwindigkeit, die dem Prozessor über eine weitere Signalleitung 40 zugeführt werden, Ausgangssignale 42 für die Ansteuerung von Einrichtungen zur Warnmeldungsausgabe und/oder für die Ansteuerung von Einrichtungen zum Eingriff in die Fahrzeugsteuerung, aus. Die Ausgangssignale 42 werden an einem Ausgang des Prozessors 18 ausgegeben.

Fig. 2 zeigt den Ablauf eines Ausführungsbeispiels des Verfahrens. In einem ersten Schritt erfolgt das Erfassen 50 der Fahrzeugumgebungsinformationen als Sensordaten 16. In einem darauffolgenden Schritt werden die Sensordaten 16 mit mindestens einem Prozessor 18 verarbeitet 52. Die Verarbeitung 52 der Sensordaten erfolgt in Abhängigkeit von auf dem Prozessor 18 ausgeführten Verarbeitungsprogrammen 22. Ferner werden vom Prozessor 18 Ausgabesignale 42 ausgegeben 55, um Warnmeldungen auszugeben und/oder in die Fahrzeugsteuerung einzugreifen.

In einem Auswahlschritt, der - z.B. in bestimmten Zeitintervallen oder Ereignisabhängig - immer wieder erneut ausgeführt wird und parallel zum Erfassen 50 der Fahrzeugumgebung, der Verarbeitung 52 und der Ausgabe 55 von Ausgabesignalen ausgeführt wird, werden Verarbeitungsprogramme 22 ausgewählt 56 und die ausgewählten Verarbeitungsprogramme 22 in den Prozessor 18 geladen. Die Auswahl 56 erfolgt wiederum in Abhängigkeit von einer zuvor ermittelten 58 Fahrzeugposition und/oder der Fahrzeugumgebungsinformationen.

## Patentansprüche

1. Vorrichtung zur Warnmeldungsausgabe und/oder zum Eingriff in die Fahrzeugsteuerung eines Kraftfahrzeugs umfassend:
- mindestens einen Sensor (12) zur Erfassung (50) der Fahrzeugumgebungsinformationen und Ausgabe als Sensordaten (16),
- mindestens einen Prozessor (18) zur Verarbeitung (52) der Sensordaten (16) in Abhängigkeit mindestens eines auf dem Prozessor (18) ausgeführten Verarbeitungsprogramms (22),
- Auswahlmittel (24) zum Auswählen (54) eines oder mehrerer Verarbeitungsprogramme (22) zur Ausführung im Prozessor (18) und
- mindestens ein Ausgabesignal (42) zur Warnmeldungsausgabe und/oder zum Eingriff in die Fahrzeugsteuerung
**dadurch gekennzeichnet, dass**
die Auswahlmittel (24) derart eingerichtet sind, eines oder mehrere Verarbeitungsprogramme (22) in Abhängigkeit ermittelter (56) Fahrzeugposition und/oder der Fahrzeugumgebungsinformationen auszuwählen (54).

2. Vorrichtung nach Anspruch 1,
**dadurch gekennzeichnet, dass**
die Vorrichtung (10) zur Ermittlung (56) der Fahrzeugposition mindestens einen Empfänger zum Empfangen von Signalen eines Navigationssatelitensystems (32), insbesondere des GPS-, Glonass oder Galileo Systems, umfasst.

3. Vorrichtung nach Anspruch 1 oder 2,
**dadurch gekennzeichnet, dass**
die Vorrichtung (10) zur Ermittlung (56) der Fahrzeugposition mindestens einen Mobilfunkempfänger und eine Auswertevorrichtung zur Auswertung von Zellkennungen eines empfangbaren Mobilfunknetzes umfasst.

4. Vorrichtung nach einem der vorhergehenden Ansprüche
**dadurch gekennzeichnet, dass**
die Vorrichtung (10) zur Erfassung (50) der Fahrzeugumgebungsinformationen mindestens einen Laserscanner (12) und/oder mindestens einen LED Sensor umfasst.

5. Vorrichtung nach einem der vorhergehenden Ansprüche
**dadurch gekennzeichnet, dass**
die Vorrichtung (10) zur Erfassung (50) der Fahrzeugumgebungsinformationen mindestens eine Videokamera umfasst.

6. Vorrichtung nach einem der vorhergehenden Ansprüche
**dadurch gekennzeichnet, dass**
in der Vorrichtung (10) eine digitale Straßenkarte und/oder Navigationskarte, insbesondere in einem Speicher (34), hinterlegt ist und die Vorrichtung (10) eingerichtet ist, Fahrzeugumgebungsinformationen mittels einer ermittelten (56) Fahrzeugposition und der in der digitalen Straßenkarte und/oder Navigationskarte hinterlegten Umgebungsinformationen zur ermittelten (56) Fahrzeugposition zu bestimmen.

7. Vorrichtung nach einem der vorhergehenden Ansprüche
**dadurch gekennzeichnet, dass**
der Prozessor (18) ein FPGA ist und die Auswahlmittel (24) eingerichtet sind, eine dynamische Konfiguration oder Rekonfiguration des FPGAs zur Ausführung des oder der ausgewählten Verarbeitungsprogramme (22) auszuführen.

8. Vorrichtung nach einem der Ansprüche 1 bis 6
**dadurch gekennzeichnet, dass**
der Prozessor (18) fest konfiguriert ist und die Auswahlmittel (24) eingerichtet sind, das oder die ausgewählten Verarbeitungsprogramme (22) von einem Speicher (20) zur Ausführung in den Prozessor (18) zu laden.

9. Vorrichtung nach einem der vorhergehenden Ansprüche
**dadurch gekennzeichnet, dass**
die Ausgabesignale (42) eingereichtet sind:
- die Leuchtweite der Beleuchtungseinrichtung, insbesondere der Fahrzeugscheinwerfer, zu steuern,
- Warnmeldungen vor Fußgängern auf oder im Bereich der Fahrbahn auszugeben,
- Warnmeldungen auszugeben oder einen Eingriff in die Fahrgeschwindigkeitsregelung bei Überschreiten der zulässigen Höchstgeschwindigkeit vorzunehmen,
- Warnmeldungen auszugeben oder einen Eingriff in die Fahrgeschwindigkeitsregelung und/oder Fahrtrichtungsregelung bei Verlassen der Fahrbahn vorzunehmen und/oder
- Warnmeldungen auszugeben oder einen Eingriff in die Fahrgeschwindigkeitsregelung und/oder Fahrtrichtungsregelung bei Unterschreiten eines vordefinierten Abstands zu vorausfahrenden Fahrzeugen vorzunehmen.

10. Verfahren zur Warnmeldungsausgabe und/oder zum Eingriff in die Fahrzeugsteuerung eines Kraftfahrzeugs, insbesondere mit einer Vorrichtung (10) nach einem der Ansprüche 1 bis 9, umfassend die Schritte:
- Erfassen (50) der Fahrzeugumgebungsinformationen als Sensordaten (16),
- Verarbeiten der Sensordaten (16) mit mindestens einem Prozessor (18) in Abhängigkeit mindestens eines auf dem Prozessor (18) ausgeführten Verarbeitungsprogramms (22),
- Auswählen (54) eines oder mehrerer Verarbeitungsprogramme (22) zur Ausführung im Prozessor (18) mit Auswahlmitteln (24) und
- Ausgeben (55) mindestens eines Ausgabesignals (42) zur Warnmeldungsausgabe und/oder zum Eingriff in die Fahrzeugsteuerung **dadurch gekennzeichnet, dass**
eines oder mehrere Verarbeitungsprogramme (22) in Abhängigkeit der ermittelten Fahrzeugposition und/oder der Fahrzeugumgebungsinformationen ausgewählt (54) werden.
